# EUROPEAN PATENT APPLICATION

(11) **EP 2 288 005 A2**
(43) Date of publication of application: **23.02.2011**
(21) Application number: 10150991.7
(22) Date of filing: 18.01.2010
(51) Int. Cl.: H02K 16/04, H02K 1/27

(54) **Bilayer magnetic electric motor**

(30) Priority: 19.08.2009 TW 98127911
(71) Applicant: Dijiya Technology, Inc., Hsin Chuang City, Taipei County (TW)
(72) Inventor: Huang, Wen-Hung, Taipei County (TW)
(74) Representative: Becker Kurig Straus

(57) **Abstract**

A bilayer magnetic electric motor comprises a rotor and a stator. The rotor has a casing and an iron ring provided in the casing. The internal and external surfaces of the iron ring are respectively disposed with a plurality of circularly arranged first magnets and second magnets. The stator is located in and axially connected to the casing and includes a plurality of internal stator coil sets and a plurality of external stator coil sets that are respectively arranged in a circular array. Accordingly, when the stator is combined with the rotor, the iron ring and the first and second magnets arc located in a circular space between the internal and external stator coil sets, and the first and second magnets respectively correspond to the internal and external stator coil sets. Consequently, the output power can be increased when the rotor rotates and the size of the electric motor can be decreased as well.

## Description

### Technical Field

The present invention relates to an electric motor and, more particularly, to a bilayer magnetic electric motor that is characterized of: increasing the output power and decreasing the size of the motor; suitable for electric motorcycles, electric bicycles, washing machines, air conditioners, and various driven vehicles by providing coil sets respectively inside or outside the magnets of a rotor.

### Background

Preserving the same advantages of conventional brushed electric motors such as larger turning moment and easy controlling, current brushless electric motors have other advantages such as more stable performance and longer lifetime since are it is not required to use elements such as phase converters and carbon brushes. Therefore, the brushless electric motors are widely used in various fields relevant to electric and pneumatic power.

However, in practice, it is required to increase greatly the number and the size of magnets disposed on rotors in order to obtain greater moment. In this way, the size of brushless electric motors is inevitably increased. Consequently, when these brushless electric motors are disposed on electric motorcycles or electric bicycles, larger space is required to locate these brushless electric motors and the total weight of the electric motorcycles or electric bicycles is also increased, which are against the tendency of lightweight and compact size for electric vehicles. Moreover, since the electrical energy of batteries used for vehicles is limited, it will consume more electrical energy by using above brushless electric motors and the use time of the batteries is also shortened.

In order to overcome above shortcomings, inventor had the motive to study and develop the present invention. After hard research and development, the inventor provides a bilayer magnetic electric motor advantageous in being compact, increasing output power, and lengthening the use time of batteries.

### Summary of the disclosure

An object of the present invention is to provide a bilayer magnet electric motor having a rotor, where the rotor is provided with an internal magnet set and an external magnet set, and the internal side of the internal magnet set and the external side of the external magnet set are respectively provided with a group of coil sets. Consequently, the size of the motor can be decreased and the total weight can be lightened while the output power is kept the same.

Another object of the present invention is to provide a bilayer magnet electric motor, where the internal side of the internal magnet set and the external side of the external magnet set are respectively provided with a group of internal coil sets and a group of external coil sets, and the two groups can be operated alone or together. Consequently, it is able to adjust the output power as required. In this way, when the groups of internal and external coil sets are operated together, sufficient torsion can be provided; when the group of the internal or external coil sets is operated alone, current can be regenerated to recharge the batteries and consequently lengthen the use time of the batteries.

In order to achieve above objects, the present invention provides a bilayer magnetic electric motor comprising a rotor and a stator. The rotor includes a casing and an iron ring provided in the casing. The internal surface of the iron ring is circularly disposed with a plurality of first magnets while the external surface thereof is circularly disposed with a plurality of second magnets. The stator is located in and axially connected to the casing, and includes a plurality of internal stator coil sets and a plurality of external stator coil sets. The internal and external stator coil sets are respectively arranged in a circular array. A circular space where locates the iron ring and the first and the second magnets, forms between the plurality of internal stator coil sets and the plurality of the external stator coil sets. The first magnets are arranged correspondingly to the internal stator coil sets while the second magnets are arranged correspondingly to the external stator coil sets.

In practice, the internal and external stator coil sets are preferable to be connected respectively with a switch and the switch is connected with a processor for rendering the internal and the external stator coil sets in a conducting state or in a disconnecting state.

The following detailed description, given by way of examples or embodiments, will best be understood in conjunction with the accompanying drawings.

### Brief Description of the Drawings

Fig. 1 is a cross-sectional schematic view showing a preferable embodiment of a bilayer magnetic electric motor of the present invention.

Fig. 2 is an exploded perspective view of the preferable embodiment of the bilayer magnetic electric motor of the present invention.

Fig. 3 is a partial cross-sectional view of the preferable embodiment of the bilayer magnetic electric motor of the present invention.

Fig. 4 is a schematic view showing two magnetic flux paths of the bilayer magnets according to the present invention, where the paths are formed after the internal and the external stator coil sets are electrified.

Fig. 5 is a block diagram showing the circuit control of the present invention that is used in electric motorcycles or electric bicycles.

### Detailed Description

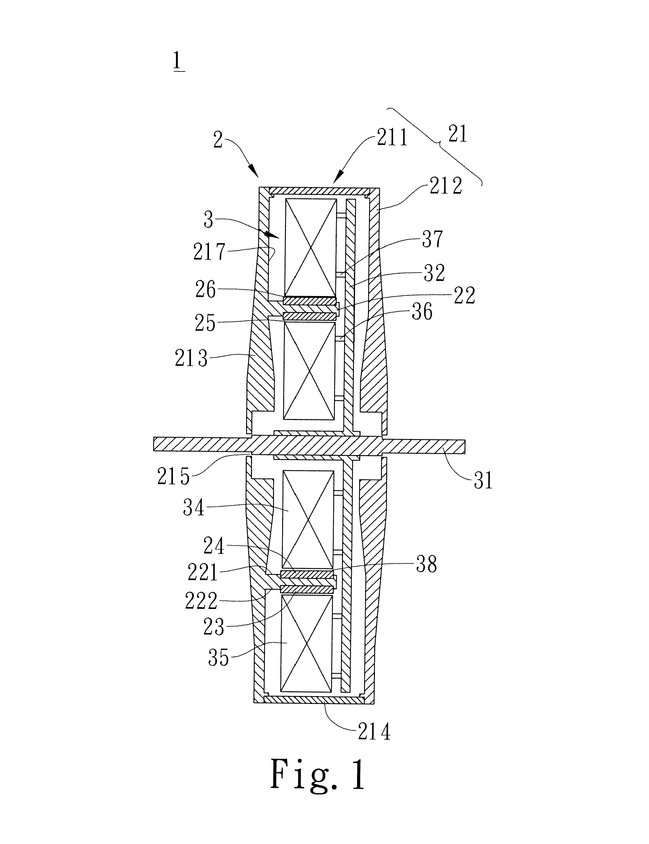

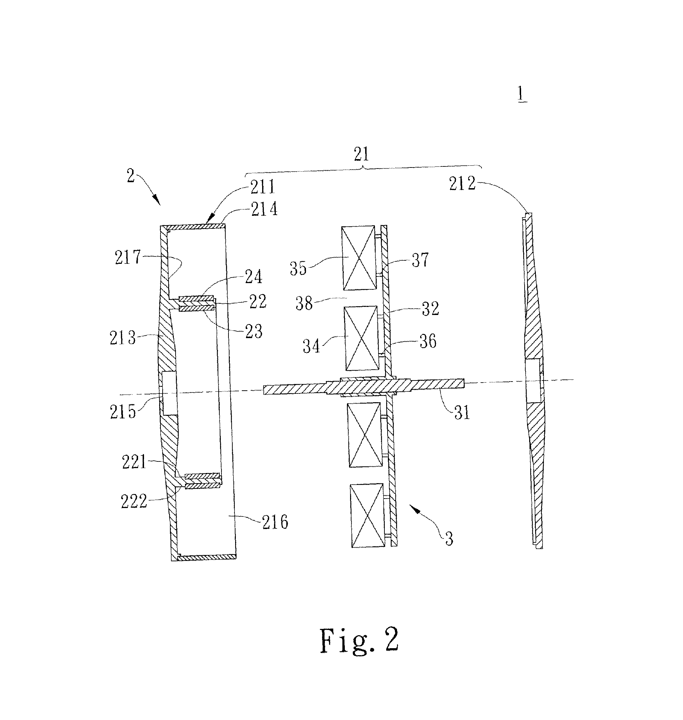

Please refer to Figs.1 to 3 showing a preferable embodiment of a bilayer magnetic electric motor 1 according to the present invention. The bilayer magnetic electric motor 1 comprises a rotor 2 and a stator 3.

The rotor 1 has a casing 21, an iron ring 22, a plurality of first magnets 23, and a plurality of second magnets 24. The casing 21 includes a cover 211 and a lateral cover 212. The cover 211 is of short cylindrical shape and has an upright plate 213 and a circular ring 214 that is vertically extended from the peripheries of the upright plate 213. The upright plate 213 is provided with an axial bore 215. The circular ring 214 is provided with an opening 216 of slightly round shape on one surface thereof and the lateral cover 212 covers the opening 216. Moreover, an iron ring 22 is formed by axially extending from the internal surface 217 of the upright plate 213 of the cover 211. The iron ring 22 is in circular shape and forms an internal surface 221 and an external surface 222 corresponding to the internal surface 221.

The first and second magnets 23, 24 are high-strength permanent magnets that are made by rare earth. Besides, the first and second magnets 23, 24 also can be made by ferrite or a superconductor that is kept in a superconducting state. In practice, the number and the pole number of the first magnets 23 are equal to those of the second magnets 24. Each first magnet 23 is in slightly rectangular shape and the plurality of the first magnets 23 is engaged with the internal surface 221 of the iron ring 22 in a circular array. Each second magnet 24 is also in slightly rectangular shape and the plurality of the second magnets 24 is engaged with the external surface 222 of the iron ring 22 in circular array.

The stator 3 is located in the casing 21 and includes a tray 32 with an arbor 31, a support plate 33, a plurality of internal stator coil sets 34, and a plurality of external stator coil sets 35. The arbor 31 is inserted through the axial bore 215 of the cover 211 to make the rotor 2 rotatable relative to the stator 3. The tray 32 is a round plate. The round plate is provided with a plurality of round rods that are vertically extended from the surface of the round plate and are arranged in a circular array. The internal round rods arranged in the circular array are used as internal support pieces 36 while the external round rods arranged in the circular array are used as external support pieces 37. One end of the internal and external support pieces 36, 37 is connected with a slightly round support plate 33 in order to position the support plate 33 and to render the support plate 33 parallel with the tray 32.

Moreover, a plurality of circularly arranged internal ribs 331 and a plurality of circularly arranged external ribs 332 are formed on the surface of the support plate 33. The internal and external ribs 331, 332 are respectively coiled with copper wire 333, 334 to form a plurality of circularly arranged internal stator coil sets 34 and a plurality of circularly arranged external stator coil sets 35. Besides, a circular space 38 is formed between the plurality of internal stator coil sets 34 and the external stator coil sets 35 for locating the iron ring 22 and the first and the second magnets 23, 24. In practice, the first magnets 23 are arranged correspondingly to and spaced by a gap 25 from the internal stator coil sets 34 while the second magnets 24 are arranged correspondingly to and spaced by a gap 26 from the external stator coil sets 35.

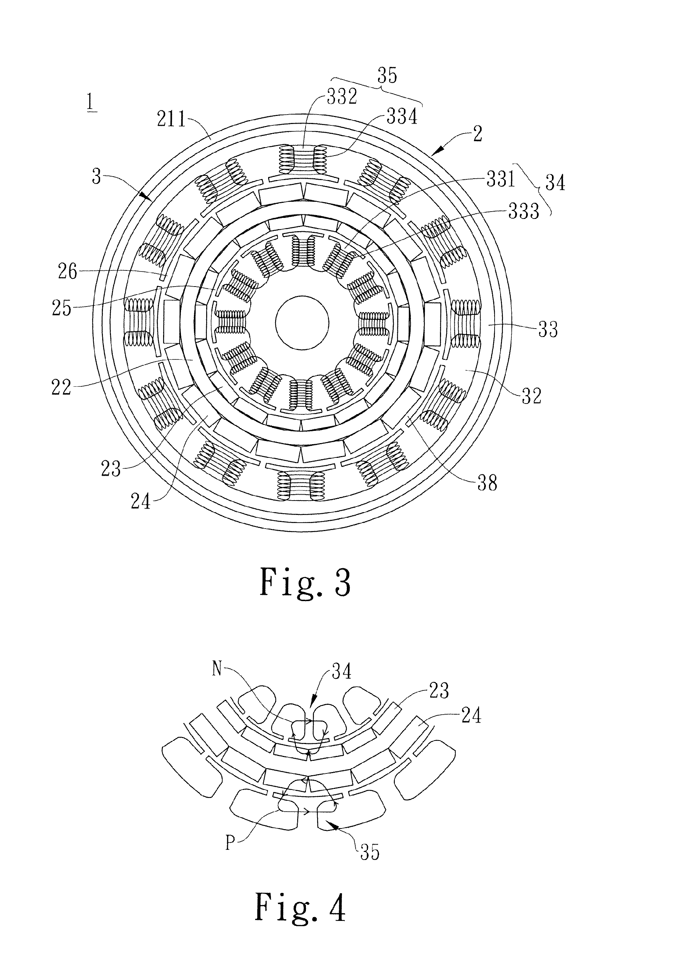

As shown in Fig.4, when the internal and external stator coil sets 34, 35 are electrified, a magnetic flux path "N" is formed between any two adjacent first magnets 23 and a corresponding internal stator coil set 34 while another magnetic flux path "P" is formed between any two adjacent second magnets 24 and a corresponding external stator coil set 35. Consequently, the output power can be increased by means of the double magnetic flux path formation.

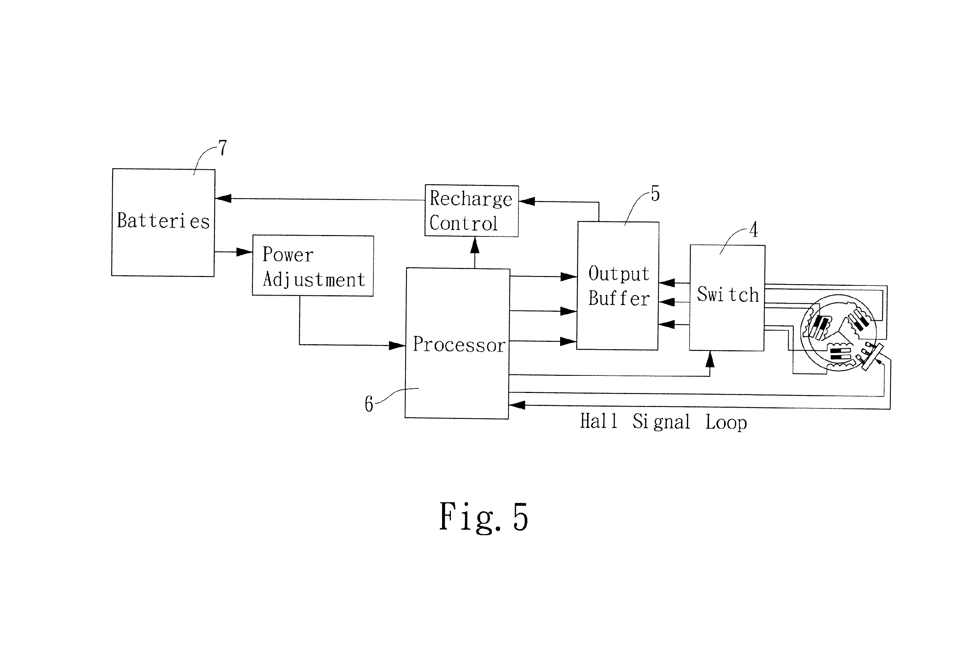

Please refer to Fig.5, which is a block diagram showing the circuit control of the present invention that is used in electric motorcycles or electric bicycles. As shown in this figure, the internal and external stator coil sets 34, 35 are respectively connected with a switch 4. The switch 4 is preferably a relay and the switch 4 is connected with an output buffer 5. The switch 4 and the output buffer 5 are respectively connected with a processor 6. By this way, users can control the processor 6 manually according to their needs to render both of the internal and the external stator coil sets 34, 35 in a conducting state or in a disconnecting state, or to render one of the internal and the external stator coil sets 34, 35 in a conducting state or in a disconnecting state. Above processor 6 can detect automatically the location of the rotor 2 by using a Hall signal loop and the detected signal is then transferred to the processor 6 for automatically turning on or off the switch 4.

When the internal stator coil sets 34 or the external stator coil sets 35 are in a disconnecting state, induction current can be produced because the rotor 2 is still rotating at this time. By means of the control of the processor 6, superfluous electric energy can be used to recharge the batteries 7 via the output buffer 5 in order to prolong the use time of the batteries 7.

Therefore, the present invention has following advantages:
1. The present invention is suitable for vehicles used in occasions of bearing different weights, such as uphill driving or overload driving on a level road. Under these conditions, operating both the internal and external stator coil sets is able to increase the output power and provide sufficient torsion. Thereby, it is not only able to avoid the overheat or even burning of a motor as a result of high current, but also to solve the problem that a conventional electric motor cannot provide sufficient power to a vehicle to drive the vehicle going upward.
2. The present invention is also suitable for vehicles used in occasions of BEARING constant weights. When vehicles are driven on a level road, the internal or the external stator coil set is driven alone. When vehicles are driven downhill, the input current toward the internal and external stator coil sets is interrupted while the two coil sets car able to produce current to recharge the batteries. Consequently, the use time of the batteries can be lengthened.
3. According to the present invention, the internal space of the electric motor can be fully utilized and double magnetic loops can be provided. Thereby, the size of the electric motor can be greatly reduced under the condition that the output power is kept the same, and consequently the total weight is also lightened to meet the need of lightness that is required by electric or pneumatic machinery.

As disclosed in above descriptions and attached drawings, the present invention can provide a bilayer magnet electric motor capable to reduce the size, increase the output power, and prolong the use time of the batteries. It is new and can be put into industrial use.

Although the embodiments of the present invention have been described in detail, many modifications and variations may be made by those skilled in the art from the teachings disclosed hereinabove. Therefore, it should be understood that any modification and variation equivalent to the spirit of the present invention be regarded to fall into the scope defined by the appended claims.

## Claims

1. A bilayer magnetic electric motor, comprising:
a rotor, including a casing and an iron ring provided in the casing, where a plurality of first magnets is circularly disposed on the internal surface of the iron ring while a plurality of second magnets is circularly disposed on the external surface of the iron ring; and
a stator, located in and axially connected to the casing, and including a plurality of internal stator coil sets and a plurality of external stator coil sets, where the internal and external stator coil sets are respectively arranged in a circular array; a circular space where locates the iron ring and the first and the second magnets, forms between the plurality of internal stator coil sets and the external stator coil sets; and the first magnets are arranged correspondingly to the internal stator coil sets while the second magnets are arranged correspondingly to the external stator coil sets.

2. The bilayer magnetic electric motor as claimed in claim 1, wherein the casing includes a cover having an opening on one side thereof and a lateral cover for covering the opening.

3. The bilayer magnetic electric motor as claimed in claim 2, wherein the iron ring is formed by axially extending from the internal surface of the cover.

4. The bilayer magnetic electric motor as claimed in claim 1, wherein the first magnets and the second magnets have the same number and the same pole number.

5. The bilayer magnetic electric motor as claimed in claim 1, wherein the stator further includes a tray with an arbor; the tray is provided with a plurality of internal support pieces arranged in a circular array and a plurality of external support pieces arranged in a circular array for respectively positioning the internal and the external stator coil sets.

6. The bilayer magnetic electric motor as claimed in claim 1, wherein the internal and external stator coil sets are respectively connected with a switch; the switch is connected with a processor for rendering the internal and the external stator coil sets in a conducting state or in a disconnecting state.
